# FASCICULE DE BREVET EUROPEEN

(11) **EP 0 682 245 B1**
(45) Date de publication et mention de la délivrance du brevet: **12.09.2001**
(21) Numéro de dépôt: 95400984.1
(22) Date de dépôt: 28.04.1995
(51) Int. Cl.: G01N 21/31

(54) **Procédé d'analyse de la composition d'un liquide à l'aide d'un spectrophotomètre à plages de détection multiples**
Verfahren zur Bestimmung der Zusammensetzung einer Flüssigkeit mit einem Spektralphotometer in mehreren Messbereichen
Method for the analysis of the composition of a liquid at several spectral ranges, using a spectrophotometer

(30) Priorité: 11.05.1994 FR 9405930
(43) Date de publication de la demande: 15.11.1995
(73) Titulaire: SECOMAM S.A., 95334 Domont Cédex (FR)
(72) Inventeur: Constant, Daniel, F-95880 Enghien les Bains (FR)
(74) Mandataire: de Saint-Palais, Arnaud Marie

(56) Documents cités:
- WO-A-92/18847
- DD-A- 270 768
- GB-A- 2 251 939
- US-A- 3 922 088
- US-A- 4 714 341
- IEEE TRANSACTIONS ON BIOMEDICAL ENGINEERING, vol.22, no.6, 1 Novembre 1975 pages 528 - 532 POTTER ET AL. 'A SPECTROPHOTOMETER FOR THE DIRECT DETERMINATION,ETC.'
- PATENT ABSTRACTS OF JAPAN vol. 10, no. 132 (P-456) 16 Mai 1986 & JP-A-60 253 952 (FUJITSU) 14 Décembre 1985
- PATENT ABSTRACTS OF JAPAN vol. 18, no. 194 (P-1722) 5 Avril 1994 & JP-A-06 003 268 (TOSHIBA CERAMICS) 11 Janvier 1994
- PATENT ABSTRACTS OF JAPAN vol. 6, no. 137 (P-130) (1015) 24 Juillet 1982 & JP-A-57 059 151 (OLYMPUS) 9 Avril 1982

## Description

La présente invention concerne un procédé d'analyse de la composition d'un liquide utilisant en tant que moyen de détection et de mesure un spectrophotomètre tel que par exemple celui qui se trouve décrit dans la demande GB-A-2.251 939 déposé au nom du demandeur.

Elle s'applique notamment, mais non exclusivement, à la biologie clinique humaine, et en particulier à l'analyse d'échantillons de sérum sanguin.

Une telle analyse est généralement effectuée en mettant l'échantillon à analyser en présence d'un réactif. Elle est basée sur la constatation que chaque substance présente un spectre d'absorption de la lumière blanche qui lui est propre, et en particulier, comprenant un ou plusieurs pics d'intensité distincts et caractéristiques. Il suffit donc à l'aide d'un spectrophotomètre de mesurer l'intensité lumineuse à une longueur d'onde centrée sur un de ces pics caractéristiques pour déterminer la proportion d'une substance contenue dans l'échantillon à analyser.

Or, il s'avère que ce procédé ne permet pas de détecter des erreurs de manipulation conduisant à des mesures erronées. Dans le cas du sérum sanguin notamment, il arrive fréquemment que l'échantillon soit de mauvaise qualité ou que l'opérateur se trompe de réactif.

Par ailleurs, il apparaît que certains liquides, et notamment le sérum sanguin, présentent des capacités d'absorption de la lumière très variables en fonction de l'échantillon considéré, et donc des spectres d'absorption dits de blanc, c'est-à-dire en l'absence de réactif, très variables d'un échantillon à l'autre. On peut également constater que le spectre d'absorption de l'échantillon en présence de réactif vient se superposer à son spectre de blanc, si bien que la mesure d'intensité effectuée à la longueur d'onde caractéristique inclue la valeur du spectre de blanc à cette longueur d'onde et donc présente un aspect relatif.

Pour s'affranchir de cet aspect relatif de la mesure, il est donc nécessaire de réaliser une seconde mesure à la même longueur d'onde sur un échantillon sans réactif, la valeur recherchée étant obtenue en corrigeant la mesure effectuée sur l'échantillon en présence de réactif avec la valeur de la seconde mesure.

L'invention a pour but de supprimer ces inconvénients en détectant les erreurs de manipulation et en délivrant instantanément la mesure absolue de la teneur d'une substance contenue dans un échantillon.

A cet effet, elle part de la constatation que, d'une part, la forme du spectre d'absorption d'un échantillon correctement prélevé varie dans des limites relativement réduites, et d'autre part, le spectre de blanc n'est pas modifié à la suite de l'introduction du réactif dans l'échantillon, en dehors des fenêtres de longueurs d'ondes contenant les pics caractéristiques de la substance à détecter.

En conséquence, elle propose un procédé de mesure de la teneur d'une substance contenue dans un échantillon liquide en présence d'un réactif, ladite substance ayant un spectre d'absorption de la lumière blanche présentant une forme predéterminée comprenant un pic d'intensité distinct, caractéristique de ladite substance présentant une forme prédéterminée, qui s'inscrit dans une fenêtre de longueurs d'ondes contenant un seul pic d'intensité.

D'une façon analogue à celle décrite dans la publication IEE Transactions on Biomedical Engineering vol. 22, n° 6, 1^{er} novembre 1975, p. 528-532, ce procédé comprend :
- la mesure simultanée de l'intensité lumineuse du susdit spectre pour au moins trois longueurs d'ondes, la première longueur d'onde étant centrée sur ledit pic distinct, la seconde et la troisième longueurs d'ondes étant situées en dehors de la fenêtre contenant le pic d'intensité et de part et d'autre de la première longueur d'onde,
- la détermination par extrapolation à l'aide de la mesure de l'intensité pour la seconde et la troisième longueurs d'ondes, de l'intensité lumineuse du spectre d'absorption de l'échantillon en l'absence de réactif à la première longueur d'onde et la correction de la mesure d'intensité pour la première longueur d'onde à l'aide de l'intensité lumineuse déterminée par extrapolation.

Selon l'invention, ce procédé est caractérisé en ce qu'il comprend la détermination de plages de valeurs respectives dans lesquelles doivent se situer les mesures effectuées pour les secondes et troisièmes longueurs d'ondes, compte tenu de ladite forme prédéterminée du spectre et de la mesure basée sur la première longueur d'onde, la vérification que les mesures basées sur les seconde et troisième longueurs d'ondes appartiennent auxdites plages de valeurs respectives et la signalisation d'une erreur dans le cas où au moins l'une des mesures basées sur la seconde et la troisième longueurs d'ondes n'appartiennent pas auxdites plages.

Ce procédé permet ainsi de se prémunir contre un certain nombre d'erreurs ou d'interférences en une seule séquence opératoire comprenant trois mesures simultanées à des longueurs d'ondes distinctes et prédéterminées.

En effet, ces trois mesures permettent d'une part, de vérifier que le pic d'intensité lumineuse est bien situé sensiblement à la longueur d'onde caractéristique attendue, pour contrôler que le réactif qui a été utilisé est correct.
D'autre part, elles permettent de contrôler la qualité de l'échantillon, c'est-à-dire, si l'intensité lumineuse mesurée à la longueur d'onde caractéristique est suffisamment élevée par rapport à celles fournies par les autres mesures.
En outre, elles permettent d'éliminer la composante du spectre de blanc due à la turbidité de l'échantillon qui perturbe la mesure.

Un mode de réalisation du procédé selon l'invention sera décrit ci-après, à titre d'exemple non limitatif, avec référence aux dessins annexés dans lesquels :
La figure 1 représente schématiquement un spectrophotomètre capable d'effectuer plusieurs mesures simultanément ;
les figures 2 et 3 montrent différents spectres d'absorption sous forme de courbes d'intensité en fonction de la longueur d'onde.

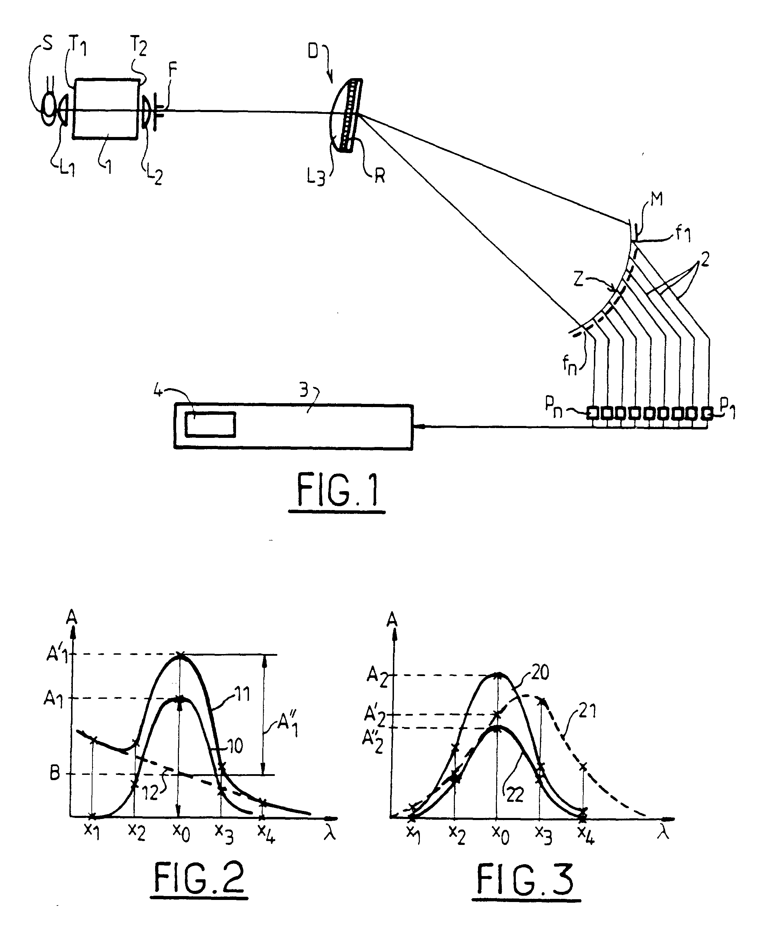

Sur la figure 1, le spectrophotomètre (voir aussi la demande GB-A-2251939) fait intervenir un puits de cuve 1 destiné à contenir le liquide dont on veut obtenir le spectre d'absorption et qui comprend une paroi transparente T₁,T₂, en au moins deux emplacements opposés.

Cette cuve 1 est éclairée par une source lumineuse halogène S, par l'intermédiaire d'une lentille convergente L₁ conçue de manière à former l'image du filament de la source S, au centre de la cuve 1 (à mi-distance entre les faces transparentes T₁,T₂).

Cette image est reproduite sur la fente d'entrée F d'un spectrographe grâce à une lentille focalisatrice L₂ placée du côté de la face T₂ de la cuve 1.

Ce spectrographe comprend essentiellement un doublet D composé d'une lentille collimatrice plan convexe L₃ accolée par sa surface plane à un réseau plan R de type transmissif, orienté de manière à ce que sa face gravée soit appliquée contre la lentille L₃ et soit donc protégée par celle-ci.

La lumière engendrée au niveau de la fente d'entrée F, par l'image lumineuse du filament de la source S, et focalisée par la lentille L₃, est déviée par le réseau R en fonction des longueurs d'ondes des rayonnements qui la composent.

De ce fait, au lieu d'obtenir une image unique de la fente F, comme ce serait le cas si l'on supprimait le réseau R, on obtient une multiplicité d'images s'échelonnant en fonction des longueurs d'ondes dans une zone focale image Z, cette succession d'images constituant le spectre que l'on veut analyser.

Dans l'exemple représenté par la figure 1, la lentille L₃ est de type plan/sphérique de sorte que la zone focale image (lieu des images de la fente F en fonction de la longueur d'onde) présente une forme incurvée.

La zone focale image est matérialisée par un masque à fentes M incurvé dont chacune des fentes f₁, ... fₙ correspond à une raie du spectre à analyser. Le rayonnement reçu par ces fentes f₁, ... fₙ est canalisé par des fibres optiques 2 connectées à des photodiodes p₁, ... pₙ qui engendrent des signaux électriques traités par un circuit électronique d'analyse 3 comprenant des moyens de calcul et un afficheur 4 des résultats des mesures.

Sur la figure 2, la courbe 10 montre la forme du spectre d'absorption d'un échantillon présentant une faible turbidité, par exemple, de plasma sanguin. En présence d'un réactif, ce spectre forme un pic d'amplitude A₁ à la longueur d'onde x₀ caractéristique de la substance que l'on cherche à détecter, la mesure de l'amplitude A₁ à l'aide d'un spectrophotomètre permettant de déterminer la quantité de la substance ainsi détectée.
Le spectrophotomètre tel que décrit précédemment qui délivre également d'autres mesures, par exemple aux longueurs d'ondes x₁,x₂,x₃,x₄, permet d'obtenir l'allure de la courbe du spectre d'absorption.

Lorsque l'échantillon présente une certaine turbidité, son spectre d'absorption 12 (représenté en traits interrompus sur la figure 2) en l'absence de réactif, appelé spectre de blanc, est sensiblement linéaire. En présence du même réactif, son spectre d'absorption 11 présente également un pic d'amplitude A'₁ à la longueur d'onde x₀, et vient se superposer au spectre de blanc.

Pour obtenir une mesure A"₁ représentative de la quantité de la substance que l'on cherche à détecter, il convient donc de retrancher à l'amplitude A'₁ mesurée en x₀, l'amplitude B du spectre en x₀ en l'absence de réactif.

Par ailleurs, on peut noter sur ces courbes 10,11 que le réactif a un effet sur la forme du spectre uniquement au voisinage de la longueur d'onde caractéristique x₀ de la substance à détecter. On peut remarquer également que les spectres d'absorption sensiblement linéaires d'échantillons de turbidité variables, sont proportionnels à la turbidité de l'échantillon.
Grâce au fait que l'on dispose d'au moins une mesure à une longueur d'onde suffisamment éloignée de x₀, par exemple en x₁, on peut donc déterminer l'amplitude B à la longueur d'onde x₀ de l'échantillon en l'absence de réactif par un simple calcul d'extrapolation linéaire.

Ce calcul de correction est effectué par le circuit d'analyse 3 et la valeur corrigée de la mesure est présentée sur l'afficheur 4.

Sur la figure 3 sont représentées une courbe 20 du spectre d'absorption que l'on doit obtenir lorsque l'on mélange un échantillon avec un réactif déterminé, et deux autres courbes 21,22 obtenues à la suite d'une erreur de manipulation.

Ainsi, sur la courbe 21 présentant un pic à une longueur d'onde différente de x₀, on a utilisé un autre réactif, si bien qu'il s'est produit une autre réaction chimique mettant en évidence une substance différente de celle que l'on cherche à détecter, et ayant de ce fait une longueur d'onde caractéristique différente.

Dans le cas de la courbe 22 présentant un pic à la longueur d'onde x₀ anormalement faible, c'est-à-dire, ayant une absorption anormale aux longueurs d'ondes considérées, on a utilisé un échantillon de sérum sanguin contenant une trop grande proportion d'hémoglobine.

Si l'on procède à une seule mesure, on obtiendra des amplitudes A'₂ pour la courbe 21 et A"₂ pour la courbe 22 erronées, sans pouvoir détecter l'anomalie.

Au contraire, si l'on dispose d'au moins deux autres mesures à des longueurs d'ondes de part et d'autre de la longueur d'onde caractéristique x₀ de la substance à détecter, on peut vérifier que la forme du spectre est correcte. En effet, on sait que pour une réaction donnée, on doit avoir une forme de spectre d'absorption donnée. A partir d'une mesure à une longueur d'onde déterminée, on peut donc déterminer des plages de valeurs dans lesquelles doivent se trouver les mesures effectuées à d'autres longueurs d'ondes.

Par conséquent, il y a une anomalie si les deux autres mesures ne se trouvent pas dans les plages de valeurs déterminées à partir de la mesure à la longueur d'onde caractéristique x₀.

En outre, on peut déterminer la cause de l'anomalie. En effet, si les deux autres mesures se trouvent au-dessus desdites plages, l'échantillon est mauvais. Par ailleurs, si l'une des deux mesures se situe au-dessous de la plage dans laquelle elle doit se trouver, et l'autre au-dessus, alors le réactif employé n'est pas correct. La cause de l'anomalie est ainsi déterminée par le circuit d'analyse 3 et indiquée sur l'afficheur 4.

Avantageusement, pour assurer une meilleure détection d'anomalie et une détermination plus précise de la valeur du spectre de blanc à la longueur d'onde caractéristique x₀, il suffit d'effectuer simultanément et de traiter davantage de mesures, comme le fait le spectrophotomètre décrit précédemment.

## Revendications

1. Procédé de mesure de la teneur d'une substance contenue dans un échantillon liquide en présence d'un réactif, ladite substance ayant un spectre d'absorption de la lumière blanche présentant une forme prédéterminée comprenant un pic d'intensité distinct, caractéristique de ladite substance, qui s'inscrit dans une fenêtre de longueurs d'ondes contenant un seul pic d'intensité, ce procédé comprenant :
- la mesure simultanée de l'intensité lumineuse dudit spectre (11) pour au moins trois longueurs d'ondes (x₀, x₁, x₄), la première longueur d'onde (x₀) étant centrée sur ledit pic distinct, la seconde (x₁) et la troisième (x₄) longueurs d'ondes étant situées en dehors de la fenêtre contenant le pic d'intensité et de part et d'autre de la première longueur d'onde (x₀), et
- la détermination par extrapolation à l'aide de la mesure de l'intensité pour la seconde (x₁) et la troisième (x₄) longueur d'onde, de l'intensité lumineuse (B) du spectre d'absorption (12) de l'échantillon en l'absence de réactif à la première longueur d'onde (x₀), et la correction de la mesure d'intensité pour la première longueur d'onde (A'₁) à l'aide de l'intensité lumineuse (B) déterminée par extrapolation,
**caractérisé en ce qu'**il comprend en outre :
- la détermination de plages de valeurs respectives dans lesquelles doivent se situer les mesures effectuées pour les seconde (x₁) et troisième (x₄) longueurs d'ondes, compte tenu de ladite forme prédéterminée du spectre (20) et de la mesure basée sur la première longueur d'onde (x₀), la vérification que les mesures basées sur les seconde (x₁) et troisième (x₄) longueurs d'ondes appartiennent auxdites plages de valeurs respectives et la signalisation d'une erreur dans le cas où au moins l'une des mesures basées sur la seconde (x₁) et la troisième (x₄) longueurs d'ondes n'appartient pas auxdites plages.

2. Procédé selon la revendication 1.
**caractérisé en ce qu'**il comprend la signalisation d'une erreur de manipulation à l'aide des positions de la seconde et de la troisième mesures par rapport auxdites plages, lorsque la seconde et/ou la troisième mesures n'appartiennent pas à leur plage de valeurs respective.

3. Procédé selon la revendication 2,
**caractérisé en ce que** l'échantillon analysé est du sérum sanguin, et en ce que, lorsque la seconde et la troisième mesures sont au-dessus de leurs plages de valeurs respectives, il est signalé que l'échantillon contient trop d'hémoglobine, et lorsqu'une seule des seconde et troisième mesures se trouve au-dessus de sa plage de valeurs, il est signalé que le réactif utilisé est mauvais.

4. Procédé selon l'une des revendications précédentes,
**caractérisé en ce qu'**il comprend la détermination de la forme du spectre d'absorption de l'échantillon analysé à partir de la mesure simultanée de l'intensité lumineuse dudit spectre (11) pour un nombre de longueurs d'ondes supérieur à trois et la prise en compte de cette forme pour la susdite détermination de plages de valeurs respectives dans lesquelles doivent se situer la seconde et troisième mesures.

## Patentansprüche

1. Verfahren für die Messung des Gehalts einer Substanz in einem flüssigen Prüfmuster in Anwesenheit eines Reaktionsmittels, wobei die genannte Substanz ein Absorptionsspektrum für weißes Licht besitzt, das eine vorgegebene Form aufweist, mit einem bestimmten Intensitäts-Peak, der für die genannte Substanz charakteristisch ist und in ein Wellenlängenfenster fällt, das nur einen einzigen Intensitäts-Peak aufweist, wobei dieses Verfahren folgendes beinhaltet:
- die gleichzeitige Messung der Lichtintensität des genannten Spektrums (11) für mindestens drei Wellenlängen (x₀, x₁, x₄), wobei die ersten Wellenlänge (x₀) auf den genannten bestimmten Peak zentriert ist, die zweite (x₁) und die dritte (x₄) Wellenlänge außerhalb des Fensters liegen, in dem sich der Intensitäts-Peak befindet und beiderseits der ersten Wellenlänge (x₀), und
- die Bestimmung der Lichtintensität (B) des Absorptionsspektrums (12) des Prüfmusters in Abwesenheit des Reaktionsmittels bei der ersten Wellenlänge (x₀) durch Extrapolierung mithilfe der Messung der Intensität der zweiten (x₁) und dritten (x₄) Wellenlänge, und Korrektur der Intensitätsmessung für die erste Wellenlänge (A'1) mithilfe der Lichtintensität (B), die mittels Extrapolierung bestimmt worden ist,
**dadurch gekennzeichnet, dass** es darüber hinaus folgendes beinhaltet:
- die Bestimmung der jeweiligen Messwertbereiche, in denen die Messwerte fur die zweite (x₁) und dritte (x₄) Wellenlänge liegen müssen, in Anbetracht der vorgegebenen Form des Spektrums (20) und der Messung auf der Grundlage der ersten Wellenlänge (x₀), die Überprüfung, dass die gemessenen Werte für die zweite (x₁) und dritte (x₄) Wellenlänge in den jeweiligen Messwertbereichen liegen und die Anzeige eines Fehlers für den Fall, dass mindestens einer der Messwerte, die auf der zweiten (x₁) und dritten (x₄) Wellenlänge beruhen, nicht in den genannten Bereichen liegt.

2. Verfahren gemäß Patentanspruch 1,
**dadurch gekennzeichnet, dass** es die Anzeige eines Handhabungsfehlers mithilfe der Position der zweiten und der dritten Messung im Verhältnis zu den genannten Messwertbereichen beinhaltet, wenn die zweite und/oder die dritte Messung nicht in den jeweiligen Messwertbereichen enthalten sind.

3. Verfahren gemäß Patentanspruch 2,
**dadurch gekennzeichnet, dass** das analysierte Prüfmuster ein Blutserum ist und dass für den Fall, dass der zweite und der dritte Messwert über ihren jeweiligen Messwertbereichen liegen, angezeigt wird, dass das Prüfmuster zuviel Hämoglobin enthält und wenn ein einziger des zweiten und dritten Messwertes über seinem Messwertbereich liegt, angezeigt wird, dass das verwendete Reaktionsmittel mangelhaft ist.

4. Verfahren gemäß einem der vorangegangenen Patenransprüche,
**dadurch gekennzeichnet, dass** es die Bestimmung der Form des Absorptionsspektrums des analysierten Prüfmusters anhand der simultanen Messung der Lichtintensität des genannten Spektrums (11) für eine Anzahl von mehr als drei Wellenlängen und die Berücksichtigung dieser Form für die oben genannte Bestimmung der jeweiligen Messwertbereiche, in denen der zweite und der dritte Messwert liegen müssen, beinhaltet.

## Claims

1. The method for measuring the contents of a substance contained in a liquid sample in the presence of a reactive agent, said substance having a spectrum for absorbing white light having a predetermined shape including a distinct intensity peak characteristic of said substance and inscribed in a window of wavelengths containing a single intensity peak, said method including :
- the simultaneous measuring of the light intensity of said spectrum (11) for at least three wavelengths (x0,x1,x4), the first wavelength (x0) being centered on said distinct peak, the second (x1) and the third (x4) wavelengths being situated outside the window containing the intensity peak and on both sides of the first wavelength (x0), and
- determining via extrapolation with the aid of the measurement of the intensity for the second (x1) and third (x4) wavelengths of the light intensity (B) of the absorption spectrum (12) of the sample in the absence of reactive agent on the first wavelength (x0) and the correction of the intensity measurement for the first wavelength (A'1) with the aid of the light intensity (B) determined by extrapolation,
**characterised in that** it further includes :
- determining the ranges of respective values in which the measurements made for the second (x1) and third (x4) wavelengths are situated having regard to said predetermined shape of the spectrum (20) and the measurement based on the first wavelength (x0), checking that the measurements based on the second (x1) and third (x4) wavelengths belong to said range of respective values and the signalling of an error when at least one of the measurements based on the second (x1) and third (x4) wavelengths does not belong to said ranges.

2. The method according to claim 1,
**characterised in that** it includes the signalling of a handling error with the aid of the positions of the second and third measurements with respect to said ranges when the second and/or third measurements do not belong to their respective range of values.

3. The method according to claim 2,
**characterised in that** the analysed sample is blood serum and in that, when the second and third measurements are above their respective ranges of values (2), the sample is pointed out as containing too much haemoglobin and when only one of the second and third measurements is found to be above its range of values (2) it is reported that the reactive agent used is unsuitable.

4. Method according to one of the preceding claims,
**characterised in that** it includes the determination of the shape of the absorption spectrum of the analysed sample on the basis of the simultaneous measurement of the light intensity of said spectrum (11) for a number of wavelengths of more than three and the taking into account of this shape for said determination of the respective range of values in which the second and third measurements are situated.
